# FASCICULE DE BREVET EUROPEEN

(11) **EP 2 585 982 B1**
(45) Date de publication et mention de la délivrance du brevet: **30.11.2016**
(21) Numéro de dépôt: 11724253.7
(22) Date de dépôt: 10.06.2011
(51) Int. Cl.: G06K 7/10, G06K 19/07

(54) **PROCEDE DE GESTION DE LA COMMUNICATION ENTRE UN DISPOSITIF ELECTRONIQUE ET UN APPAREIL DE COMMUNICATION**
VERWALTUNGSMETHODE VON KOMMUNIKATION ZWISCHEN EINEM ELEKTRONISCHEN GERÄT UND EINEM KOMMUNIKATIONSGERÄT
MANAGEMENT PROCESS OF COMMUNICATION BETWEEN AN ELECTRONIC DEVICE AND A COMMUNICATION DEVICE

(30) Priorité: 22.06.2010 FR 1054939
(43) Date de publication de la demande: 01.05.2013
(73) Titulaire: STMicroelectronics (Rousset) SAS, 13790 Rousset (FR)
(72) Inventeur: BANCEL, Frédéric, F-13560 Sénas (FR); LINK, Nathalie, F-13530 Trets (FR); HENNEBOIS, Brigitte, F-83580 Ginasservis (FR); CHOMAUD, David, F-83270 Saint-Cyr-sur-Mer (FR)
(74) Mandataire: Casalonga
(86) Numéro de dépôt international: PCT/EP2011/059706
(87) Numéro de publication internationale: WO 2011/160967

(56) Documents cités:
- WO-A1-2006/110000

## Description

L'invention concerne la communication entre un dispositif électronique et un appareil de communication, et plus particulièrement la gestion du protocole de communication entre ce dispositif, par exemple une carte à puce, et cet appareil de communication, par exemple un lecteur.

De nombreux protocoles de communication différents existent pour la communication entre notamment une carte à puce et un lecteur.

On peut citer par exemple les protocoles I2C et ISO-7816, plus particulièrement adaptés au dialogue « à contact » entre une carte à puce et un lecteur, c'est-à-dire lorsque celle-ci est en contact avec le lecteur. On peut également citer les protocoles type A et type B définis dans la norme ISO-14 443, et plus particulièrement destinés à une communication sans contact entre une carte à puce et un lecteur, c'est-à-dire lorsque la carte à puce et le lecteur sont à distance l'un de l'autre.

Par ailleurs, certaines cartes à puce peuvent à la fois être équipées de contacts pour un dialogue à contact avec un lecteur, et d'une antenne, pour un dialogue du type « sans contact ».

Compte tenu de la multiplicité des protocoles de communication, certaines cartes à puce contiennent, lors de leur fabrication, différents modules, respectivement affectés à différents protocoles de communication, et offrant la possibilité à la carte à puce de dialoguer avec un lecteur selon l'un de ses protocoles implémentés. Par contre, lors de la personnalisation de la carte, c'est-à-dire lorsqu'elle est livrée à un opérateur (un organisme bancaire, par exemple), le choix du protocole de communication est figé en fonction de l'indication fournie par le client. En conséquence, la carte à puce ne pourra alors dialoguer qu'avec ce protocole choisi et sera donc incapable de dialoguer selon un autre protocole.

Selon un mode de mise en oeuvre et de réalisation, il est proposé un procédé de gestion de la communication entre un dispositif électronique et un appareil de communication, permettant, au sein du dispositif électronique, par exemple la carte à puce, une détection automatique de protocole parmi un ensemble prédéfini de protocoles de communication que la carte peut mettre en oeuvre.

Selon un mode de mise en oeuvre et de réalisation, il est proposé une détection de protocole qui soit automatique, rapide et simple à mettre en oeuvre.

Selon un aspect, il est proposé un procédé de gestion de la communication entre un dispositif électronique et un appareil de communication, le dispositif étant équipé de plusieurs moyens de décodage de protocoles, correspondant respectivement à différents protocoles de communication, de façon à être capable de dialoguer avec ledit appareil de communication lors de transactions, sélectivement selon l'un de ces protocoles de communication ;
le procédé comprend une détection automatique de protocole comportant :
a) une activation de tous les moyens de décodage au début d'une transaction,
b) une délivrance du signal reçu par le dispositif électronique à tous les moyens de décodage,
c) une analyse d'au moins un signal délivré par au moins l'un des moyens de décodage,
d) une sélection de l'un des moyens de décodage à partir du résultat de ladite analyse,
et une poursuite de ladite transaction avec le moyen de décodage sélectionné.

Une transaction est ici une durée de communication entre le dispositif, par exemple la carte à puce, et l'appareil, par exemple le lecteur, qui peut être plus ou moins longue selon l'application envisagée. Ainsi lorsque la communication s'effectue au moyen de trames successives, une transaction peut comporter une ou plusieurs trames en réception et/ou en émission, éventuellement séparées par des périodes de travail du processeur du dispositif.

Ainsi, selon cet aspect, tous les moyens de décodage sont activés pour recevoir chacun le signal d'entrée, et on analyse, séquentiellement ou en parallèle, les signaux de sortie de ces moyens de décodage. Le fait d'activer tous les moyens de décodage et d'effectuer une telle analyse sur les signaux de sortie de ces moyens de décodage, permet de détecter rapidement le protocole de communication en minimisant le risque pour le système de reboucler indéfiniment, ce qui aurait pu être le cas si les décodeurs avaient été activés l'un après l'autre.

Par ailleurs, la détection de protocoles s'effectue automatiquement, par exemple sans signal de commande externe provenant du microprocesseur de la carte à puce.

En effet les moyens de décodage sont tous activés au début d'une transaction aux fins de la détection automatique de protocole, et reçoivent tous simultanément le même signal reçu par le dispositif. Et en présence de ce signal et quel que soit le contenu de ce signal, la détection automatique de protocole comprend au sein de chaque décodeur une tentative automatique d'identification des caractéristiques du protocole que ledit décodeur est sensé décoder, c'est-à-dire sans qu'il soit nécessaire de déclencher son traitement interne d'identification de protocole par un signal de commande spécifique émanant de moyens externes aux décodeurs, et sans qu'il soit nécessaire de lui délivrer un signal spécifique à décoder émanant par exemple de moyens externes aux décodeurs.

Par ailleurs l'étape c) est automatiquement déclenchée en présence d'au moins un signal délivré par au moins l'un des décodeurs. En d'autres termes la seule présence dudit au moins un signal délivré suffit pour enclencher (commander) l'analyse du ou des signaux délivrés par les décodeurs aux fins de détecter automatiquement le protocole.

Cette détection automatique de protocole est avantageusement mise en oeuvre, non pas par logiciel, mais par des moyens matériels (hardware). A cet égard, cette détection automatique de protocole comprend la mise en oeuvre d'au moins une machine d'états implémentée par des moyens logiques. Le fait que l'analyse prévue à l'étape c) soit effectuée en dehors des moyens de décodage, facilite notamment sa mise en oeuvre sous la forme d'une machine d'états.

Selon un mode de mise en oeuvre, dans l'étape d), dès qu'un moyen de décodage délivre au moins une information d'identification du protocole associé à ce moyen de décodage, ou lorsque tous les moyens de décodage sauf un délivrent une information d'erreur, on sélectionne le moyen de décodage ayant délivré ladite au moins une information d'identification ou le moyen de décodage n'ayant pas délivré d'information d'erreur.

Et, selon un mode de mise en oeuvre, la détection automatique de protocole comprend une réitération des étapes c) et d), lorsque tous les moyens de décodage ont délivré une information d'erreur.

En d'autres termes, on recommence alors l'analyse des signaux délivrés par les moyens de décodage.

Selon un mode de mise en oeuvre permettant une économie de consommation électrique, il est prévu après l'étape d) une désactivation de tous les moyens de décodage différents du moyen de décodage sélectionné. Cela étant, une telle variante est optionnelle.

Selon un mode de mise en oeuvre, lorsqu'on ne désactive pas les moyens de décodage différents du moyen de décodage sélectionné après l'étape d), il est prévu, si lors de la poursuite de ladite transaction, le moyen de décodage sélectionné délivre une information d'erreur, de réitérer alors les étapes c) et d) de la détection automatique de protocole.

Par contre, si tous les moyens de décodage différents du moyen de décodage sélectionné ont été désactivés, il est prévu, selon un mode de mise en oeuvre, de réitérer la totalité de la détection automatique de protocoles, comportant notamment l'étape a), si lors de ladite poursuite de ladite transaction, le moyen de décodage sélectionné délivre une information d'erreur.

Selon un mode de mise en oeuvre, on réitère la détection automatique de protocole à la fin de ladite transaction, ou bien au moins les étapes c) et d) si les moyens de décodage, différents du moyen de décodage sélectionné, n'ont pas été désactivés, et ce pendant au moins une transaction ultérieure, généralement plusieurs transactions ultérieures, jusqu'à la satisfaction d'un critère d'arrêt.

Ce critère d'arrêt peut varier selon les applications. Ainsi le critère d'arrêt peut être par exemple la fin de la communication entre la carte et le lecteur. Dans ce cas on détecte le protocole lors de chaque transaction.

Ce critère d'arrêt peut être par exemple un nombre de transactions, à partir duquel on considère que le protocole de communication ne changera plus. Ce nombre peut être prédéfini ou non.

La satisfaction du critère d'arrêt peut être comme on le verra ci-après, la fin d'une phase spécifique de communication, par exemple une phase de gestion d'anti-collision, marquée par exemple par l'émission d'un signal en provenance du processeur de la carte.

Selon un mode de mise en oeuvre, la sélection du moyen de décodage peut être effectuée lorsque ledit moyen de décodage délivre au moins deux informations d'identification du protocole associé à ce moyen de décodage. Ceci permet dans certains cas de mieux différencier un protocole de communication d'un autre.

Dans certaines applications, le dialogue entre le dispositif et l'appareil de communication peut comprendre une première phase de communication, par exemple une phase de gestion d'anticollision dans le cas d'une communication à distance, comportant plusieurs transactions au cours desquelles le même moyen de décodage a été sélectionné, suivi d'une deuxième phase de communication et, dans ce cas, on conserve avantageusement, dans ladite deuxième phase de communication, ce même moyen de décodage.

Ainsi par exemple, dans une application de communication à distance entre une carte à puce et un lecteur, si un moyen de décodage a été constamment sélectionné au cours des transactions de la phase de gestion d'anticollision, il convient de garder ce moyen de décodage lors de la poursuite de la communication entre la carte à puce et le lecteur.

Le dispositif peut être une carte à puce, et l'un au moins des protocoles de communication peut être un protocole de communication permettant un dialogue sans contact entre la carte à puce et l'appareil de communication.

Cela étant, l'un au moins des protocoles de communication peut être également un protocole de communication permettant un dialogue à contact entre la carte à puce et l'appareil de communication.

En variante, au moins deux protocoles de communication peuvent être des protocoles de communication permettant un dialogue sans contact entre la carte à puce et l'appareil de communication, par exemple des protocoles type A et type B définis dans la norme ISO-14 443.

Selon un autre aspect, il est proposé un dispositif électronique, comprenant une interface de communication avec un appareil de communication, et des moyens de traitement couplés à ladite interface de communication.

Selon une caractéristique générale de cet autre aspect, ladite interface de communication comporte
des moyens d'entrée pour recevoir un signal d'entrée,
plusieurs moyens de décodage de protocole couplés auxdits moyens d'entrée et correspondant respectivement à plusieurs protocoles différents de communication avec ledit appareil de communication lors de transactions,
des moyens de gestion configurés pour activer tous les moyens de décodage au début d'une transaction, et
des moyens de détection automatique de protocole comportant des moyens d'analyse configurés pour effectuer une analyse du ou des signaux délivrés par au moins l'un des moyens de décodage et des moyens de sélection pour sélectionner l'un des moyens de décodage à partir du résultat de l'analyse.

Selon un mode de réalisation, les moyens de sélection sont configurés pour sélectionner le moyen de décodage délivrant au moins une information d'identification du protocole associé à ce moyen de décodage, ou lorsque tous les moyens de décodage sauf un délivrent une information d'erreur, le moyen de décodage n'ayant pas délivré d'information d'erreur.

Selon un mode de réalisation, les moyens de détection automatique de protocole comprennent des moyens de commande configurés pour réactiver les moyens d'analyse et les moyens de sélection lorsque tous les moyens de décodage ont délivré une information d'erreur.

Selon un mode de réalisation, les moyens de détection automatique de protocole comprennent des moyens de commande configurés pour réactiver les moyens d'analyse et les moyens de sélection, si le moyen de décodage sélectionné délivre une information d'erreur.

Selon un mode de réalisation, les moyens de détection automatique de protocole comprennent des moyens de commande configurés pour désactiver tous les moyens de décodage différents du moyen de décodage sélectionné.

Selon un mode de réalisation, les moyens de gestion sont configurés pour réactiver tous les moyens de décodage ainsi que les moyens de détection automatique de protocole, si lors de ladite poursuite de ladite transaction le moyen de décodage sélectionné délivre une information d'erreur.

Selon un mode de réalisation, les moyens de détection automatique de protocole comprennent des moyens de commande configurés pour réactiver au moins les moyens d'analyse et les moyens de sélection, ou bien tous les moyens de décodage ainsi que les moyens de détection automatique de protocole à la fin de ladite transaction pendant au moins une transaction ultérieure jusqu'à la satisfaction d'un critère d'arrêt.

Selon un mode de réalisation, les moyens de sélection sont configurés pour sélectionner le moyen de décodage délivrant au moins deux informations d'identification du protocole associé à ce moyen de décodage.

Selon un mode de réalisation, le dialogue entre le dispositif et l'appareil de communication comprend une première phase de communication comportant plusieurs transactions au cours desquelles le même moyen de décodage a été sélectionné, suivie d'une deuxième phase de communication, et l'interface de communication est en outre configurée pour conserver ce même moyen de décodage dans ladite deuxième phase de communication.

Selon un mode de réalisation, les moyens de détection automatique de protocole comportent des moyens logiques implémentant au moins une machine d'états.

Selon un mode de réalisation, le dispositif forme une carte à puce et l'un au moins des protocoles de communication est un protocole de communication permettant un dialogue sans contact entre la carte à puce et l'appareil de communication.

D'autres avantages et caractéristiques de l'invention apparaîtront à l'examen de la description détaillée de modes de mise en oeuvre et de réalisation, nullement limitatifs, et des dessins annexés sur lesquels :
- la figure 1 illustre schématiquement un mode de réalisation d'un dispositif selon l'invention,
- la figure 2 illustre plus en détail mais toujours schématiquement un mode de réalisation d'une interface de communication d'un dispositif selon l'invention, et,
- les figures 3 à 5 illustrent schématiquement des organigrammes relatifs à des modes de mise en oeuvre du procédé selon l'invention.

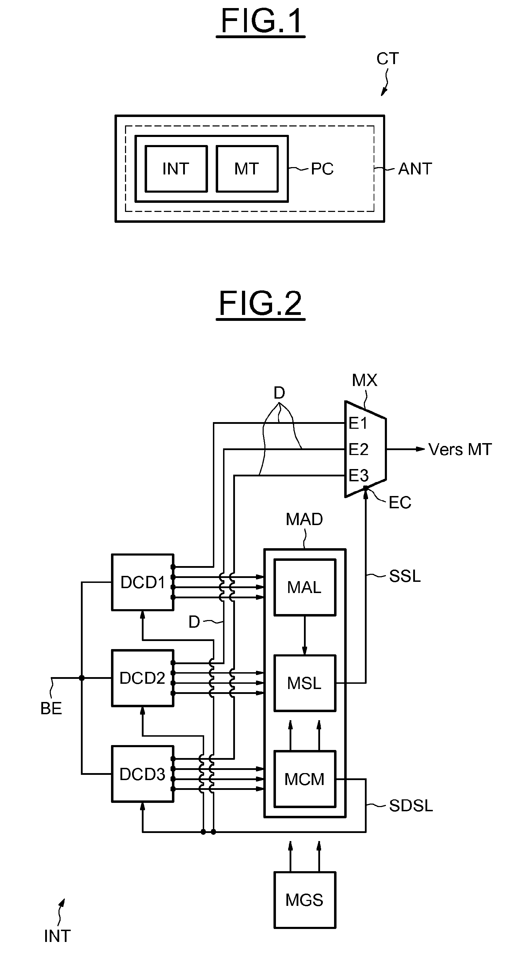

Sur la figure 1, le dispositif électronique susceptible de communiquer avec un appareil de communication est une carte à puce CT possédant un circuit intégré ou puce PC, incorporant de façon classique et connue en soi des moyens de traitement MT comportant notamment un microprocesseur, ainsi qu'une interface de communication INT.

L'interface de communication INT peut comporter des plots de contact destinés à coopérer avec des plots de contact homologues de l'appareil de communication, par exemple un lecteur, et/ou des moyens d'entrée reliés à une antenne ANT dans le cas où la carte CT est amenée à dialoguer avec le lecteur dans le cadre d'un protocole de communication sans contact.

Sur la figure 2, on suppose que la carte CT est susceptible de dialoguer avec le lecteur selon un protocole de communication choisi parmi trois protocoles de communication différents.

A cet égard, l'interface de communication comporte des moyens d'entrée BE pour recevoir le signal d'entrée, et plusieurs, ici trois, moyens de décodage de protocole DCD1, DCD2, DCD3 couplés aux moyens d'entrée BE et correspondant respectivement aux trois protocoles différents de communication. Ces différents moyens de décodage sont destinés à recevoir simultanément ledit signal d'entrée.

Il convient de noter ici que, bien que la référence BE désigne des moyens d'entrée, ces mêmes moyens peuvent être également des moyens de sortie destinés à délivrer un signal à destination du lecteur.

Outre ces décodeurs DCDi, l'interface de communication INT comprend également des moyens de gestion configurés notamment pour activer les moyens de décodage DCDi. A cet égard, les moyens de gestion MGS peuvent comporter par exemple des moyens de génération d'un signal d'horloge délivré sur l'entrée d'initialisation des décodeurs DCDi, et permettant leur activation.

Ces décodeurs DCDi sont destinés à reconnaître les caractéristiques d'un protocole de communication et, en réception, à extraire des trames correspondantes les données utiles transmises depuis le lecteur. La structure matérielle de tels décodeurs est classique et connue en soi.

Bien que, comme on le verra plus en détail ci-après, les décodeurs soient activés, lors d'une phase de détection de protocole, au début de chaque transaction de cette phase, ils peuvent être avantageusement activés en permanence, dès que la carte est alimentée, et le rester tant qu'ils ne sont pas désactivés. A cet égard, comme on le verra plus en détail ci-après, tous les décodeurs ne sont jamais désactivés ensemble et il y a toujours au moins un décodeur activé.

Outre les moyens qui viennent d'être évoqués, l'interface de communication INT comporte également des moyens MAD de détection automatique de protocole. Ces moyens MAD, sont connectés aux sorties des décodeurs et comportent des moyens d'analyse MAL configurés pour effectuer une analyse du ou des signaux délivrés par au moins l'un des moyens de décodage DCDi, et des moyens de sélection MSL pour sélectionner l'un des moyens de décodage à partir du résultat de l'analyse.

Fonctionnellement, ces moyens de détection automatique de protocole MAD comportent également des moyens de commande MCM configurés notamment comme on le verra plus en détail ci-après, à, par exemple, réactiver les moyens d'analyse MAL et les moyens de sélection MSL, ou bien à désactiver certains des décodeurs DCDi.

Outre ces moyens, il est également prévu un multiplexeur MX possédant une entrée de commande EC destinée à recevoir un signal de sélection SSL en provenance des moyens de sélection MSL, et trois entrées E1, E2, E3 respectivement couplées aux trois sorties des décodeurs DCDi délivrant les données D transmises par le lecteur.

Les autres signaux délivrés par les décodeurs DCDi sont, comme on le verra plus en détail ci-après, notamment une ou plusieurs informations d'indentification et/ou des informations d'erreur. Ces signaux sont délivrés aux moyens de détection automatique de protocole MAD.

La sortie du multiplexeur MX est couplée aux moyens de traitement MT du circuit intégré PC de la carte CT.

Les décodeurs étant tous activés au début d'une transaction au fin de la détection automatique de protocole, ils reçoivent tous simultanément le même signal reçu par le dispositif, et sont notamment configurés pour, en présence de ce signal et quel que soit le contenu de ce signal, automatiquement tenter d'identifier les caractéristiques du protocole qu'ils sont sensés décoder, c'est-à-dire sans qu'il soit nécessaire de déclencher leur traitement interne d'identification de protocole par un signal de commande spécifique émanant de moyens externes aux décodeurs, et sans qu'il soit nécessaire de leur délivrer un signal spécifique à décoder émanant par exemple de moyens externes aux décodeurs.

Par ailleurs les moyens MAD sont notamment configurés pour, au début d'une transaction et en l'absence de protocole détecté et identifié, déclencher automatiquement une détection de protocole en présence d'au moins un signal délivré par au moins l'un des décodeurs. En d'autres termes la seule présence dudit au moins un signal délivré suffit pour enclencher la détection automatique de protocole. C'est donc ledit au moins un signal qui commande le déclenchement de la détection automatique de protocole effectuée par les moyens MAD.

Par ailleurs, ces moyens MAD sont des moyens distincts des décodeurs et associés de façon commune à tous les décodeurs. Ainsi il devient alors possible, comme on le verra plus en détails ci-après, de les réaliser sous la forme d'une unique machine d'états. La réalisation de ces moyens MAD sous la forme de moyens logiques implémentant cette machine d'états, est alors simplifiée et contribue à la rapidité de détection du protocole.

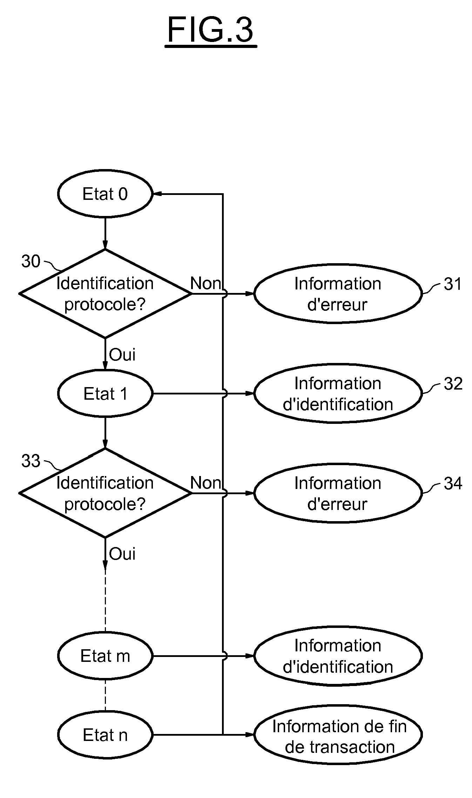

Sur la figure 3, on a représenté un organigramme d'une machine d'états implémentée au sein d'un décodeur DCDi.

A partir de l'état « 0 », le décodeur DCDi détermine (étape 30) s'il peut identifier, à partir du signal reçu en entrée, les caractéristiques du protocole qu'il est censé décoder.

Si tel n'est pas le cas, le décodeur délivre alors une information d'erreur (étape 31).

Dans le cas contraire, on passe à l'état « 1 » dans lequel le décodeur délivre une information d'identification (étape 32). Cette information d'identification est, en d'autres termes, un marqueur caractéristique du protocole de communication.

Lors de la poursuite de la transaction, le décodeur continue à chercher à identifier le protocole (étape 33) pour éventuellement délivrer une information d'erreur (étape 34) si une erreur dans le protocole est détectée.

Dans le cas contraire, une nouvelle information d'identification ou bien la même que précédemment, est émise.

Le processus se répète ainsi d'état en état pour se terminer au niveau de l'état « n » par la délivrance d'une information de fin de transaction suivie d'un retour dans l'état « 0 ».

On va maintenant donner quelques exemples d'informations d'identification dans le cas de protocoles de communication particuliers.

Ainsi, dans une application de communication sans contact entre une carte à puce et un lecteur, on peut utiliser par exemple le protocole type A défini par la norme ISO-14 443, ou bien le protocole type B également défini par cette norme.

Dans ces deux cas, une transaction débute par une période de réception du signal, suivie d'une période de traitement, par les moyens de traitement MT, de la commande reçue, et se termine à l'issue d'une période de transmission d'un signal depuis la carte vers le lecteur.

Pour le protocole type B, lorsque l'entrée de signal est à « 0 » pendant environ 10,5 cycles d'horloge, puis reste à « 1 » pendant environ 2,5 cycles du signal d'horloge, un premier signal logique est alors émis ou décodé. Ce signal logique est désigné sous le vocable « SOF » (« Start Of Frame ») et forme une information d'identification du protocole type B.

Pour une trame de type A, une information d'identification est un signal logique désigné par le vocable « SOC » (« Start Of Com »). Il est délivré lorsqu'un front montant de l'entrée de signal est suivi de ¾ ou de 5/4 de cycle d'horloge avant la prochaine pause caractérisée potentiellement par une absence de signal d'horloge et une entrée de signal au niveau « 0 ».

Il existe également, dans le cas des communications sans contact, un protocole de type B', également défini par la norme ISO 14 443. Dans le protocole de type B', l'information d'identification est obtenue lorsque l'entrée série est à « 0 » pendant 10 cycles d'horloge puis à « 1 » pendant 5 cycles d'horloge.

Il existe également des protocoles adaptés à des communications à contact. Il s'agit notamment des protocoles I2C et ISO 78 16, bien connus de l'homme du métier.

Ces deux protocoles ont une entrée d'horloge et une entrée de données. Ces deux entrées peuvent être communes pour les deux protocoles. Dans ce cas, pour définir quel est le protocole utilisé pour la réception, on peut s'appuyer sur plusieurs informations d'identification.

Plus précisément, pour le protocole I2C, une première information d'identification est caractérisée par un front descendant de l'entrée de données si l'horloge est au niveau logique « 1 ». Cela étant, cette première information d'identification n'est pas suffisamment caractéristique pour être utilisée comme sélection de protocole. Aussi, on utilise avantageusement une deuxième information d'identification, qui est la réception et la vérification de l'adresse qui représente le premier octet reçu par le protocole. C'est seulement à la délivrance de cette deuxième information d'identification que le protocole I2C sera considéré comme détecté.

En ce qui concerne le protocole ISO 78 16, la première information d'identification peut être un signal logique désigné sous la dénomination « Start Bit » délivré lorsque l'entrée de données est à « 0 » pendant 372 cycles d'horloge. Une seconde information d'identification possible est la réception d'un octet avec la vérification de la parité.

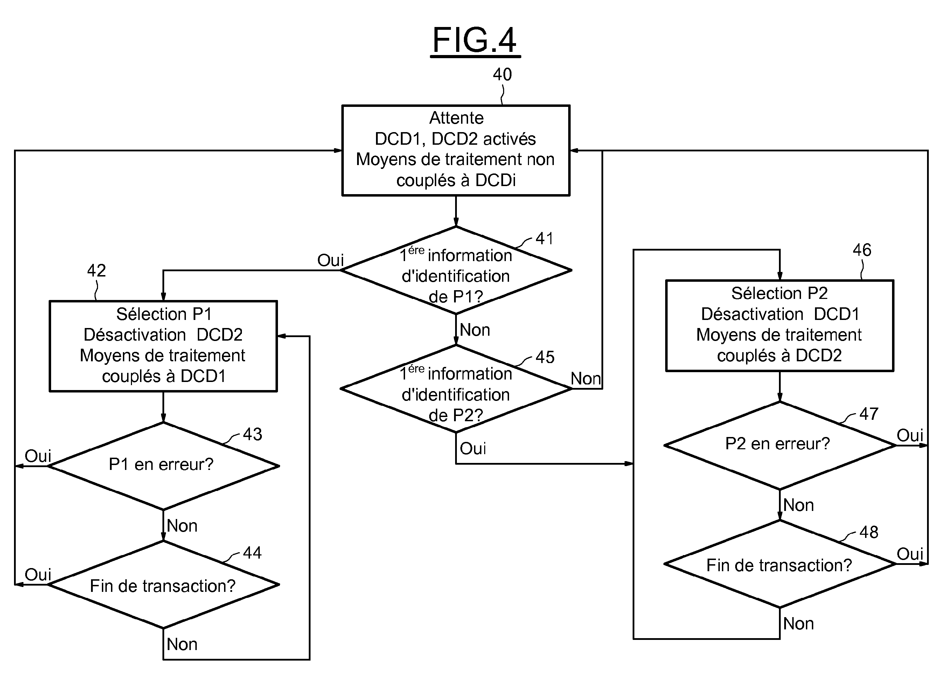

On se réfère maintenant plus particulièrement à la figure 4, pour décrire un exemple d'algorithme mis en oeuvre au sein des moyens de détection automatique de protocole MAD.

Il s'agit, là encore, d'une machine d'états.

Tout comme pour la machine d'états implémentée dans un décodeur et illustrée sur la figure 3, les différentes instructions et renvois sont écrits en langage VHDL, puis les moyens logiques permettant la réalisation matérielle de la machine d'états de la figure 4 sont obtenus par logiciel de synthèse.

On suppose ici à des fins de simplification, que la carte à puce n'est équipée que de deux décodeurs, par exemple un décodeur DCD1 susceptible de décoder un protocole P1 sans contact type A et un décodeur DCD2 susceptible de décoder un protocole P2 sans contact type B.

L'état 40 correspond à un état d'attente dans lequel, par exemple au début de la transaction, les décodeurs DCD1 et DCD2 sont activés.

Les moyens de traitement MT ne sont pas fonctionnellement couplés au décodeur DCDi.

Dans l'état 41, on vérifie si la première information d'identification, relative au protocole P1, est reçue.

Dans la négative, on vérifie si la première information d'identification relative au protocole P2 est reçue (étape 42).

Dans la négative, on revient dans l'état d'attente.

Si la première information d'identification relative au protocole P1 est reçue, on sélectionne alors le protocole P1 et on commande le multiplexeur MX de façon à relier la sortie de données du décodeur DCD1 aux moyens de traitement MT.

Par ailleurs, de façon à réduire la consommation électrique, on désactive (signal SDSL, figure 2) le décodeur DCD2. En pratique, on ne délivre plus de signal d'horloge à ce décodeur.

Puis, les moyens MAD déterminent (étape 43) s'ils reçoivent ou non une information d'erreur relative au protocole P1.

Dans l'affirmative, on revient dans l'étape 40 et les deux décodeurs sont à nouveau activés.

Dans la négative, on attend la fin de transaction (étape 44) et, tant que l'on n'a pas obtenu le signal de fin de transaction, on réitère les étapes 42, 43 et 44. Par contre, en fin de transaction, on revient dans l'étape 40.

Des étapes similaires aux étapes 42, 43 et 44 sont effectuées en ce qui concerne le protocole P2 et sont respectivement référencées 46, 47 et 48. Ainsi, dans l'étape 46, c'est cette fois-ci le protocole P2 qui est sélectionné et le décodeur DCD1 qui est désactivé.

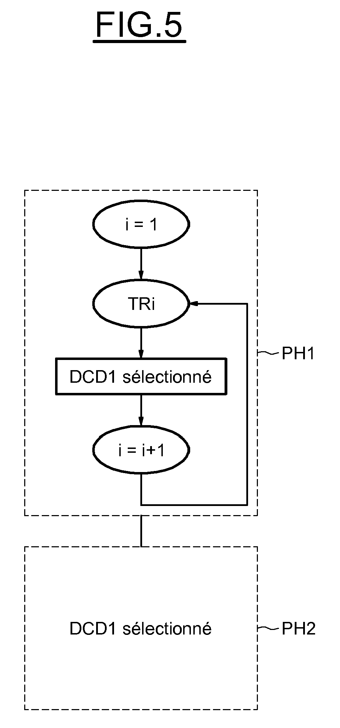

Dans une application de dialogue sans contact, il y a généralement une phase de communication PH1 (figure 5) comportant une gestion d'anti-collision entre plusieurs cartes susceptibles de dialoguer avec le lecteur.

Durant cette phase, si le décodeur DCD1 a été sélectionné au cours des transactions entre la carte CT et le lecteur, alors on garde dans la phase PH2 suivant cette phase PH1 le même décodeur DCD1 pour la poursuite du dialogue entre la carte CT et le lecteur.

## Revendications

1. Procédé de gestion de la communication entre un dispositif électronique et un appareil de communication, ledit dispositif étant équipé de plusieurs moyens de décodage de protocole (DCDi) correspondant respectivement à différents protocoles de communication de façon à être capable de dialoguer avec ledit appareil de communication lors de transactions sélectivement selon l'un de ces protocoles de communication, procédé comprenant une détection automatique de protocole comportant a) une activation (40) de tous les moyens de décodage au début d'une transaction, b) une délivrance du signal reçu par le dispositif électronique à tous les moyens de décodage, c) une analyse (41) d'au moins un signal délivré par au moins l'un des moyens de décodage et d) une sélection (42) de l'un des moyens de décodage à partir du résultat de ladite analyse, et une poursuite de ladite transaction avec le moyen de décodage sélectionné.

2. Procédé selon la revendication 1, dans lequel dans l'étape d) dès qu'un moyen de décodage (DCDi) délivre au moins une information d'identification du protocole associé à ce moyen de décodage ou lorsque tous les moyens de décodage sauf un délivrent une information d'erreur, on sélectionne le moyen de décodage ayant délivré ladite au moins une information d'identification ou le moyen de décodage n'ayant pas délivré d'information d'erreur.

3. Procédé selon la revendication 1 ou 2, dans lequel la détection automatique de protocole comprend une réitération des étapes c) et d) lorsque tous les moyens de décodage (DCDi) ont délivré une information d'erreur.

4. Procédé selon l'une des revendications précédentes, comprenant une réitération au moins des étapes c) et d) de la détection automatique de protocole, si lors de ladite poursuite de ladite transaction le moyen de décodage sélectionné (DCDi) délivre une information d'erreur.

5. Procédé selon l'une des revendications précédentes, comprenant en outre après l'étape d) une désactivation de tous les moyens de décodage (DCD2) différents du moyen de décodage sélectionné (DCD1).

6. Procédé selon les revendications 4 et 5, comprenant une réitération de la détection automatique de protocole, si lors de ladite poursuite de ladite transaction le moyen de décodage sélectionné (DCD1) délivre une information d'erreur.

7. Procédé selon l'une des revendications précédentes, comprenant une réitération au moins des étapes c) et d) à la fin de ladite transaction pendant au moins une transaction ultérieure jusqu'à la satisfaction d'un critère d'arrêt.

8. Procédé selon les revendications 5 et 7, comprenant une réitération de la détection automatique de protocole à la fin de ladite transaction pendant au moins une transaction ultérieure jusqu'à la satisfaction d'un critère d'arrêt.

9. Procédé selon l'une des revendications précédentes, dans lequel ladite sélection du moyen de décodage est effectuée lorsque ledit moyen de décodage délivre au moins deux informations d'identification du protocole associé à ce moyen de décodage.

10. Procédé selon l'une des revendications précédentes, dans lequel le dialogue entre le dispositif et l'appareil de communication comprend une première phase de communication (PH1) comportant plusieurs transactions au cours desquelles le même moyen de décodage a été sélectionné, suivie d'une deuxième phase de communication (PH2), et on conserve dans ladite deuxième phase de communication ce même moyen de décodage.

11. Procédé selon l'une des revendications précédentes, dans lequel le dispositif est une carte à puce (CT) et l'un au moins des protocoles de communication est un protocole de communication permettant un dialogue sans contact entre la carte à puce et l'appareil de communication.

12. Procédé selon la revendication 11, dans lequel au moins deux protocoles de communication sont des protocoles de communication permettant un dialogue sans contact entre la carte à puce et l'appareil de communication.

13. Procédé selon la revendication 12, dans lequel les deux protocoles de communications sont les protocoles type A et type B définis dans la norme ISO 14443.

14. Procédé selon les revendications 10 et 13, dans lequel la première phase de communication est une phase de gestion d'anti-collision.

15. Procédé selon l'une des revendications précédentes, dans lequel la détection automatique de protocole comprend la mise en oeuvre d'au moins une machine d'états implémentée par des moyens logiques.

16. Dispositif électronique, comprenant une interface de communication (INT) avec un appareil de communication, et des moyens de traitement (TM) couplés à ladite interface de communication, **caractérisé en ce que** ladite interface de communication comporte des moyens d'entrée (BE) pour recevoir un signal d'entrée, plusieurs moyens de décodage de protocole (DCDi) couplés auxdits moyens d'entrée et correspondant respectivement à plusieurs protocoles différents de communication avec ledit appareil de communication lors de transactions, des moyens de gestion (MGS) configurés pour activer tous les moyens de décodage au début d'une transaction et des moyens de détection automatique de protocole (MAD) comportant des moyens d'analyse (MAL) configurés pour effectuer une analyse du ou des signaux délivrés par au moins l'un des moyens de décodage et des moyens de sélection (MSL) pour sélectionner l'un des moyens de décodage à partir du résultat de l'analyse.

17. Dispositif selon la revendication 16, dans lequel les moyens de sélection (MSL) sont configurés pour sélectionner le moyen de décodage délivrant au moins une information d'identification du protocole associé à ce moyen de décodage, ou lorsque tous les moyens de décodage sauf un délivrent une information d'erreur, le moyen de décodage n'ayant pas délivré d'information d'erreur.

18. Dispositif selon la revendication 16 ou 17, dans lequel les moyens de détection automatique de protocole (MAD) comprennent des moyens de commande (MCM) configurés pour réactiver les moyens d'analyse et les moyens de sélection lorsque tous les moyens de décodage ont délivré une information d'erreur.

19. Dispositif selon l'une des revendications 16 à 18, dans lequel les moyens de détection automatique de protocole (MAD) comprennent des moyens de commande configurés pour réactiver les moyens d'analyse et les moyens de sélection, si le moyen de décodage sélectionné délivre une information d'erreur.

20. Dispositif selon l'une des revendications 16 à 19, dans lequel les moyens de détection automatique de protocole (MAD) comprennent des moyens de commande configurés pour désactiver tous les moyens de décodage différents du moyen de décodage sélectionné.

21. Dispositif selon les revendications 19 et 20, dans lequel les moyens de gestion (MGS) sont configurés pour réactiver tous les moyens de décodage ainsi que les moyens de détection automatique de protocole, si lors de ladite poursuite de ladite transaction le moyen de décodage sélectionné délivre une information d'erreur.

22. Dispositif selon l'une des revendications 16 à 21, dans lequel les moyens de détection automatique de protocole (MAD) comprennent des moyens de commande configurés pour réactiver au moins les moyens d'analyse et les moyens de sélection à la fin de ladite transaction.

23. Dispositif selon les revendications 20 et 22, dans lequel les moyens de gestion (MGS) sont configurés pour réactiver tous les moyens de décodage ainsi que les moyens de détection automatique de protocole à la fin de ladite transaction.

24. Dispositif selon l'une des revendications 16 à 23, dans lequel les moyens de sélection (MSL) sont configurés pour sélectionner le moyen de décodage délivrant au moins deux informations d'identification du protocole associé à ce moyen de décodage.

25. Dispositif selon l'une des revendications 16 à 24, dans lequel le dialogue entre le dispositif et l'appareil de communication comprend une première phase de communication comportant plusieurs transactions au cours desquelles le même moyen de décodage a été sélectionné, suivie d'une deuxième phase de communication, et l'interface de communication est en outre configurée pour conserver dans ladite deuxième phase de communication ce même moyen de décodage.

26. Dispositif selon l'une des revendications 16 à 25, dans lequel les moyens de détection automatique de protocole (MAD) comportent des moyens logiques implémentant au moins une machine d'états.

27. Dispositif selon l'une des revendications 16 à 26, formant une carte à puce (CT) et l'un au moins des protocoles de communication est un protocole de communication permettant un dialogue sans contact entre la carte à puce et l'appareil de communication.

28. Dispositif selon la revendication 27, dans lequel au moins deux protocoles de communication sont des protocoles de communication permettant un dialogue sans contact entre la carte à puce et l'appareil de communication.

29. Dispositif selon la revendication 28, dans lequel les deux protocoles de communications sont les protocoles type A et type B définis dans la norme ISO 14443.

30. Dispositif selon les revendications 25 et 29, dans lequel la première phase de communication (PH1) est une phase de gestion d'anti-collision.

## Patentansprüche

1. Verfahren zur Verwaltung der Kommunikation zwischen einer elektronischen Vorrichtung und einem Kommunikationsgerät, wobei die Vorrichtung mit mehreren Protokolldecodiereinrichtungen (DCDi) ausgestattet ist, die verschiedenen Kommunikationsprotokollen entsprechen, um fähig zu sein, bei Transaktionen selektiv gemäß einem dieser Kommunikationsprotokolle mit dem Kommunikationsgerät zu dialogisieren, wobei das Verfahren eine automatische Protokollerfassung, die a) eine Aktivierung (40) aller Decodiereinrichtungen zu Beginn einer Transaktion, b) eine Lieferung des von der elektronischen Vorrichtung empfangenen Signals an alle Decodiereinrichtungen, c) eine Analyse (41) mindestens eines von mindestens einer der Decodiereinrichtungen gelieferten Signals und d) eine Auswahl (42) einer der Decodiereinrichtungen ausgehend vom Ergebnis der Analyse aufweist, und eine Verfolgung der Transaktion mit der ausgewählten Decodiereinrichtung enthält.

2. Verfahren nach Anspruch 1, wobei im Schritt d), sobald eine Decodiereinrichtung (DCDi) mindestens eine Identifikationsinformation des dieser Decodiereinrichtung zugeordneten Protokolls liefert, oder wenn alle Decodiereinrichtungen bis auf eine eine Fehlerinformation liefern, die Decodiereinrichtung, die die mindestens eine Identifikationsinformation geliefert hat, oder die Decodiereinrichtung ausgewählt wird, die keine Fehlerinformation geliefert hat.

3. Verfahren nach Anspruch 1 oder 2, wobei die automatische Protokollerfassung eine Wiederholung der Schritte c) und d) enthält, wenn alle Decodiereinrichtungen (DCDi) eine Fehlerinformation geliefert haben.

4. Verfahren nach einem der vorhergehenden Ansprüche, das eine Wiederholung mindestens der Schritte c) und d) der automatischen Protokollerfassung enthält, wenn bei der Verfolgung der Transaktion die ausgewählte Decodiereinrichtung (DCDi) eine Fehlerinformation liefert.

5. Verfahren nach einem der vorhergehenden Ansprüche, das außerdem nach dem Schritt d) eine Deaktivierung aller Decodiereinrichtungen (DCD2) enthält, die sich von der ausgewählten Decodiereinrichtung (DCD1) unterscheiden.

6. Verfahren nach den Ansprüchen 4 und 5, das eine Wiederholung der automatischen Protokollerfassung enthält, wenn bei der Verfolgung der Transaktion die ausgewählte Decodiereinrichtung (DCD1) eine Fehlerinformation liefert.

7. Verfahren nach einem der vorhergehenden Ansprüche, das eine Wiederholung mindestens der Schritte c) und d) am Ende der Transaktion während mindestens einer späteren Transaktion bis zur Erfüllung eines Stoppkriteriums enthält.

8. Verfahren nach den Ansprüchen 5 und 7, das eine Wiederholung der automatischen Protokollerfassung am Ende der Transaktion während mindestens einer späteren Transaktion bis zur Erfüllung eines Stoppkriteriums enthält,

9. Verfahren nach einem der vorhergehenden Ansprüche, wobei die Auswahl der Decodiereinrichtung ausgeführt wird, wenn die Decodiereinrichtung mindestens zwei Identifikationsinformationen des dieser Decodiereinrichtung zugeordneten Protokolls liefert.

10. Verfahren nach einem der vorhergehenden Ansprüche, wobei der Dialog zwischen der Vorrichtung und dem Kommunikationsgerät eine erste Kommunikationsphase (PH1), die mehrere Transaktionen aufweist, während denen die gleiche Decodiereinrichtung ausgewählt wurde, gefolgt von einer zweiten Kommunikationsphase (PH2) enthält, und in der zweiten Kommunikationsphase die gleiche Decodiereinrichtung beibehalten wird.

11. Verfahren nach einem der vorhergehenden Ansprüche, wobei die Vorrichtung ein Chip (CT) ist und mindestens eines der Kommunikationsprotokolle ein Kommunikationsprotokoll ist, das einen kontaktlosen Dialog zwischen dem Chip und dem Kommunikationsgerät ermöglicht.

12. Verfahren nach Anspruch 11, wobei mindestens zwei Kommunikationsprotokolle Kommunikationsprotokolle sind, die einen kontaktlosen Dialog zwischen dem Chip und dem Kommunikationsgerät ermöglichen.

13. Verfahren nach Anspruch 12, wobei die zwei Kommunikationsprotokolle Protokolle des Typs A und des Typs B sind, die in der Norm ISO 14443 definiert sind.

14. Verfahren nach den Ansprüchen 10 und 13, wobei die erste Kommunikationsphase eine Antikollisions-Verwaltungsphase ist.

15. Verfahren nach einem der vorhergehenden Ansprüche, wobei die automatische Protokollerfassung die Anwendung mindestens einer Zustandsmaschine enthält, die durch logische Einrichtungen implementiert wird.

16. Elektronische Vorrichtung, die eine Kommunikationsschnittstelle (INT) mit einem Kommunikationsgerät und Verarbeitungseinrichtungen (TM) enthält, die mit der Kommunikationsschnittstelle gekoppelt sind, **dadurch gekennzeichnet, dass** die Kommunikationsschnittstelle Eingangseinrichtungen (BE) zum Empfang eines Eingangssignals, mehrere Protokolldecodiereinrichtungen (DCDi), die mit den Eingangseinrichtungen gekoppelt sind und mehreren verschiedenen Kommunikationsprotokollen mit dem Kommunikationsgerät während der Transaktionen entsprechen, Verwaltungseinrichtungen (MGS), die konfiguriert sind, alle Decodiereinrichtungen zu Beginn einer Transaktion zu aktivieren, und Einrichtungen zur automatischen Protokollerfassung (MAD) aufweist, die Analyseeinrichtungen (MAL), die konfiguriert sind, eine Analyse des oder der Signale durchzuführen, die von mindestens einer der Decodiereinrichtungen geliefert werden, und Auswahleinrichtungen (MSL) aufweisen, um eine der Decodiereinrichtungen ausgehend vom Ergebnis der Analyse auszuwählen.

17. Vorrichtung nach Anspruch 16, wobei die Auswahleinrichtungen (MSL) konfiguriert sind, die Decodiereinrichtung, die mindestens eine Identifikationsinformation des dieser Decodiereinrichtung zugeordneten Protokolls liefert, oder wenn alle Decodiereinrichtungen bis auf eine eine Fehlerinformation liefern, die Decodiereinrichtung auszuwählen, die keine Fehlerinformation geliefert hat.

18. Vorrichtung nach Anspruch 16 oder 17, wobei die Einrichtungen zur automatischen Protokollerfassung (MAD) Steuereinrichtungen (MCM) enthalten, die konfiguriert sind, die Analyseeinrichtungen und die Auswahleinrichtungen zu reaktivieren, wenn alle Decodiereinrichtungen eine Fehlerinformation geliefert haben.

19. Vorrichtung nach einem der Ansprüche 16 bis 18, wobei die Einrichtungen zur automatischen Protokollerfassung (MAD) Steuereinrichtungen enthalten, die konfiguriert sind, die Analyseeinrichtungen und die Auswahleinrichtungen zu reaktivieren, wenn die ausgewählte Decodiereinrichtung eine Fehlerinformation liefert.

20. Vorrichtung nach einem der Ansprüche 16 bis 19, wobei die Einrichtungen zur automatischen Protokollerfassung (MAD) Steuereinrichtungen enthalten, die konfiguriert sind, alle Decodiereinrichtungen zu deaktivieren, die sich von der ausgewählten Decodiereinrichtung unterscheiden.

21. Vorrichtung nach den Ansprüchen 19 und 20, wobei die Verwaltungseinrichtungen (MGS) konfiguriert sind, die Decodiereinrichtungen sowie die Einrichtungen zur automatischen Protokollerfassung zu reaktivieren, wenn während der Verfolgung der Transaktion die ausgewählte Decodiereinrichtung eine Fehlerinformation liefert.

22. Vorrichtung nach einem der Ansprüche 16 bis 21, wobei die Einrichtungen zur automatischen Protokollerfassung (MAD) Steuereinrichtungen enthalten, die konfiguriert sind, mindestens die Analyseeinrichtungen und die Auswahleinrichtungen am Ende der Transaktion zu reaktivieren.

23. Vorrichtung nach den Ansprüchen 20 und 22, wobei die Verwaltungseinrichtungen (MGS) konfiguriert sind, alle Decodiereinrichtungen sowie die Einrichtungen zur automatischen Protokollerfassung am Ende der Transaktion zu reaktivieren.

24. Vorrichtung nach einem der Ansprüche 16 bis 23, wobei die Auswahleinrichtungen (MSL) konfiguriert sind, die Decodiereinrichtung auszuwählen, die mindestens zwei Identifikationsinformationen des dieser Decodiereinrichtung zugeordneten Protokolls liefert.

25. Vorrichtung nach einem der Ansprüche 16 bis 24, wobei der Dialog zwischen der Vorrichtung und dem Kommunikationsgerät eine erste Kommunikationsphase, die mehrere Transaktionen aufweist, während denen die gleiche Decodiereinrichtung ausgewählt wurde, gefolgt von einer zweiten Kommunikationsphase enthält, und die Kommunikationsschnittstelle außerdem konfiguriert ist, in der zweiten Kommunikationsphase diese gleiche Decodiereinrichtung beizubehalten.

26. Vorrichtung nach einem der Ansprüche 16 bis 25, wobei die Einrichtungen zur automatischen Protokollerfassung (MAD) logische Einrichtungen aufweisen, die mindestens eine Zustandsmaschine implementieren.

27. Vorrichtung nach einem der Ansprüche 16 bis 26, die einen Chip (CT) bildet, und mindestens eines der Kommunikationsprotokolle ein Kommunikationsprotokoll ist, das einen kontaktlosen Dialog zwischen dem Chip und dem Kommunikationsgerät ermöglicht.

28. Vorrichtung nach Anspruch 27, wobei mindestens zwei Kommunikationsprotokolle Kommunikationsprotokolle sind, die einen kontaktlosen Dialog zwischen dem Chip und dem Kommunikationsgerät ermöglichen.

29. Vorrichtung nach Anspruch 28, wobei die zwei Kommunikationsprotokolle die Protokolle des Typs A und Typs B sind, die in der Norm ISO 14443 definiert sind.

30. Vorrichtung nach den Ansprüchen 25 und 29, wobei die erste Kommunikationsphase (PH1) eine Antikollisions-Verwaltungsphase ist.

## Claims

1. Method for managing communication between an electronic device and a communication apparatus, the said device being equipped with several protocol decoding means (DCDi) corresponding respectively to various communication protocols so as to be capable of dialoguing with the said communication apparatus during transactions selectively according to one of these communication protocols, method comprising an automatic protocol detection comprising a) an activation (40) of all the decoding means at the start of a transaction, b) a delivery of the signal received by the electronic device to all the decoding means, c) an analysis (41) of at least one signal delivered by at least one of the decoding means and d) a selection (42) of one of the decoding means on the basis of the result of the said analysis, and a conducting of the said transaction with the selected decoding means.

2. Method according to Claim 1, in which in step d) as soon as a decoding means (DCDi) delivers at least one cue identifying the protocol associated with this decoding means or when all the decoding means except one deliver an error cue, the decoding means having delivered the said at least one identification cue or the decoding means not having delivered an error cue is selected.

3. Method according to Claim 1 or 2, in which the automatic protocol detection comprises a repetition of steps c) and d) when all the decoding means (DCDi) have delivered an error cue.

4. Method according to one of the preceding claims, comprising a repetition at least of steps c) and d) of the automatic protocol detection, if during the said conducting of the said transaction the selected decoding means (DCDi) delivers an error cue.

5. Method according to one of the preceding claims, furthermore comprising after step d) a deactivation of all the decoding means (DCD2) that differ from the selected decoding means (DCD1).

6. Method according to Claims 4 and 5, comprising a repetition of the automatic protocol detection, if during the said conducting of the said transaction the selected decoding means (DCD1) delivers an error cue.

7. Method according to one of the preceding claims, comprising a repetition at least of steps c) and d) at the end of the said transaction during at least one subsequent transaction until a stopping criterion is satisfied.

8. Method according to Claims 5 and 7, comprising a repetition of the automatic protocol detection at the end of the said transaction during at least one subsequent transaction until a stopping criterion is satisfied.

9. Method according to one of the preceding claims, in which the said selection of the decoding means is performed when the said decoding means delivers at least two cues identifying the protocol associated with this decoding means.

10. Method according to one of the preceding claims, in which the dialogue between the device and the communication apparatus comprises a first communication phase (PH1) comprising several transactions in the course of which the same decoding means has been selected, followed by a second communication phase (PH2), and this same decoding means is retained in the said second communication phase.

11. Method according to one of the preceding claims, in which the device is a chip card (CT) and at least one of the communication protocols is a communication protocol allowing contactless dialogue between the chip card and the communication apparatus.

12. Method according to Claim 11, in which at least two communication protocols are communication protocols allowing contactless dialogue between the chip card and the communication apparatus.

13. Method according to Claim 12, in which the two communication protocols are the type A and type B protocols defined in ISO standard 14443.

14. Method according to Claims 10 and 13, in which the first communication phase is an anti-collision management phase.

15. Method according to one of the preceding claims, in which the automatic protocol detection comprises the use of at least one state machine implemented by logic means.

16. Electronic device, comprising an interface (INT) for communication with a communication apparatus, and processing means (TM) coupled to the said communication interface, **characterized in that** the said communication interface comprises input means (BE) for receiving an input signal, several protocol decoding means (DCDi) coupled to the said input means and corresponding respectively to several different protocols for communication with the said communication apparatus during transactions, management means (MGS) configured to activate all the decoding means at the start of a transaction and automatic protocol detection means (MAD) comprising analysis means (MAL) configured to perform an analysis of the signal or signals delivered by at least one of the decoding means and selection means (MSL) for selecting one of the decoding means on the basis of the result of the analysis.

17. Device according to Claim 16, in which the selection means (MSL) are configured to select the decoding means delivering at least one cue identifying the protocol associated with this decoding means, or when all the decoding means except one deliver an error cue, the decoding means not having delivered an error cue.

18. Device according to Claim 16 or 17, in which the automatic protocol detection means (MAD) comprise control means (MCM) configured to reactivate the analysis means and the selection means when all the decoding means have delivered an error cue.

19. Device according to one of Claims 16 to 18, in which the automatic protocol detection means (MAD) comprise control means configured to reactivate the analysis means and the selection means, if the selected decoding means delivers an error cue.

20. Device according to one of Claims 16 to 19, in which the automatic protocol detection means (MAD) comprise control means configured to deactivate all the decoding means that differ from the selected decoding means.

21. Device according to Claims 19 and 20, in which the management means (MGS) are configured to reactivate all the decoding means as well as the automatic protocol detection means if, during the said conducting of the said transaction, the selected decoding means delivers an error cue.

22. Device according to one of Claims 16 to 21, in which the automatic protocol detection means (MAD) comprise control means configured to reactivate at least the analysis means and the selection means at the end of the said transaction.

23. Device according to Claims 20 and 22, in which the management means (MGS) are configured to reactivate all the decoding means as well as the automatic protocol detection means at the end of the said transaction.

24. Device according to one of Claims 16 to 23, in which the selection means (MSL) are configured to select the decoding means delivering at least two cues identifying the protocol associated with this decoding means.

25. Device according to one of Claims 16 to 24, in which the dialogue between the device and the communication apparatus comprises a first communication phase comprising several transactions in the course of which the same decoding means has been selected, followed by a second communication phase, and the communication interface is furthermore configured to retain this same decoding means in the said second communication phase.

26. Device according to one of Claims 16 to 25, in which the automatic protocol detection means (MAD) comprise logic means implementing at least one state machine.

27. Device according to one of Claims 16 to 26, forming a chip card (CT) and at least one of the communication protocols is a communication protocol allowing contactless dialogue between the chip card and the communication apparatus.

28. Device according to Claim 27, in which at least two communication protocols are communication protocols allowing contactless dialogue between the chip card and the communication apparatus.

29. Device according to Claim 28, in which the two communication protocols are the type A and type B protocols defined in ISO standard 14443.

30. Device according to Claims 25 and 29, in which the first communication phase (PH1) is an anti-collision management phase.
